# EUROPÄISCHE PATENTSCHRIFT

(11) **EP 1 438 609 B1**
(45) Veröffentlichungstag und Bekanntmachung des Hinweises auf die Patenterteilung: **19.01.2005**
(21) Anmeldenummer: 02800141.0
(22) Anmeldetag: 30.09.2002
(51) Int. Cl.: G02B 3/00, G02B 7/02, G02B 23/24, G02B 6/32

(54) **LINSE UND VERFAHREN ZUM HERSTELLEN EINER LINSE**
LENS AND METHOD FOR PRODUCING A LENS
LENTILLE ET PROCEDE DE FABRICATION D'UNE LENTILLE

(30) Priorität: 01.10.2001 DE 10148532
(43) Veröffentlichungstag der Anmeldung: 21.07.2004
(73) Patentinhaber: Karl Storz GmbH & Co. KG, 78532 Tuttlingen (DE)
(72) Erfinder: LEI, Fang, 78591 Durchhausen (DE); RENNER, Klaus, 78576 Liptingen (DE); RUDISCHHAUSER, Jürgen, 78532 Tuttlingen (DE); KUPFERSCHMID, Markus, 78576 Emmingen-Liptingen (DE)
(74) Vertreter: Fugmann, Winfried
(86) Internationale Anmeldenummer: PCT/EP2002/010949
(87) Internationale Veröffentlichungsnummer: WO 2003/029849

(56) Entgegenhaltungen:
- EP-A- 0 087 793
- DE-A- 3 113 110
- DE-A- 3 431 631
- DE-A- 3 839 364
- PATENT ABSTRACTS OF JAPAN vol. 2000, no. 07, 29. September 2000 (2000-09-29) -& JP 2000 117603 A (NIKON CORP), 25. April 2000 (2000-04-25) in der Anmeldung erwähnt

## Beschreibung

Die Erfindung bezieht sich auf eine Linse zum Einsatz in optischen Systemen.

Optische Linsen kommen zum Einsatz in einer Vielzahl optischer Geräte, beispielsweise in Fernrohren und -gläsern, Mikroskopen, Endoskopen und anderen Sehrohren wie Technoskopen, Periskopen und dergleichen.

Optische Linsen sind in den genannten Anwendungsgebieten in der Regel in einem Schaft nacheinander, aneinander anliegend oder mit Abstand zueinander als ein Linsensystem angeordnet.

Dabei sind die Linsen eines Systems bezüglich des Schafts fixiert, indem sie an ringförmigen Außenabschnitten ihrer Stirnflächen durch eine Fixiereinrichtung angedrückt werden. Eine örtliche Fixierung mehrerer Linsen zueinander kann erfolgen, indem die Linsen Scheitel-an-Scheitel aneinander angelegt werden oder Abstandshülsen, die Linsen an ringförmigen Außenabschnitten ihrer Stirnflächen berühren, zwischen je zwei benachbarten Linsen festgepresst werden.

Insbesondere bei Endoskopen, aber auch bei anderen Sehrohren, werden Linsen oft in der Form von Stablinsen eingesetzt.

Bei Stablinsen wird in einem ersten Bearbeitungsschritt die gesamte Außenfläche geschliffen. Alle optisch wirksamen Flächen werden in einem weiteren Bearbeitungsschritt zur Erzeugung möglichst glatter Flächen poliert, eine Oberflächenbearbeitung, die zu spiegelnden Oberflächen führt.

In der Druckschrift JP 2000117603 A wird vorgeschlagen, die gesamte Oberfläche einer Linse zu polieren, also auch die radiale Umfangsfläche zu polieren, um einen Bruch der Linse durch Wärmebelastung zu verhindern.

Bei Stablinsen macht die Umfangsfläche den größten Anteil der Oberfläche aus. Wenn diese vollständig poliert bzw. spiegelnd ist, so wird jegliches Streulicht ungeschwächt reflektiert, was den Bildkontrast verschlechtert. Somit ist das Verfahren gemäß der Druckschrift JP 2000117603 A für Stablinsen nicht geeignet. Um diese Reflexionserscheinungen an der Umfangsfläche zu verhindern, wird üblicherweise das Polieren für alle optisch nicht wirksamen Flächen, d.h. an allen radialen Umfangsflächen, weggelassen.

Das an den optisch nicht wirksamen Flächen durchgeführte Linsen-Schleifen ist allerdings ein Verfahren, bei dem mikroskopisch gesehen Partikel aus dem Linsenmaterialverbund herausgerissen werden, was mechanische Grenzflächenkräfte mit sich bringt, die oftmals ein Herausreißen tieferliegender Partikel und somit Risse bewirken.

Bei Systemen aus Stablinsen insbesondere mit längeren Schäften, wie sie vor allem in der Endoskopie vorkommen, existiert ein Problem bezüglich Biegebelastungen, die auf den Schaft aufgebracht werden. Der Schaft, der durch seinen relativ zur Länge geringen Durchmesser verhältnismäßig biegeweich ist, überträgt Biegemomente, die die Stablinsen mechanisch stark belasten.

Bei der Montage der Linsen in den Schaft treten weitere mechanische Belastungen auf, z.B. durch das Verdrehen von schraubbaren Fixiereinrichtungen gegen die ringförmigen Außenabschnitte der Stirnflächen zu fixierender Linsen.

Da Linsen und Abstandshalter bei den meisten genannten Systemen mit Spiel in den Schaft eingesetzt werden, kann es ferner zu Reibbewegungen zwischen benachbarten dieser Bauteile und/oder dem Schaft kommen.

Außerdem treten beim Einsatz von Linsen in einem der genannten Systeme neben genannter Biegebelastung weitere Belastungen auf, etwa Stoß- oder Biegestoßbelastungen, wenn das entsprechende Linsensystem z.B. beim Herunterfallen auftrifft.

Außer mechanischen Belastungen kommen insbesondere in der Endoskopie thermische Belastungen des Linsensystems vor. Zum Einen beim Einführen eines kalten Endoskopschafts in den menschlichen Körper, so dass sowohl zeitlich, beim Ein- und Ausführen des Endoskopschafts, eine Temperaturänderung auftritt, als auch örtlich ein Temperaturgradient zwischen außerhalb des Körpers und im Körper liegendem Endoskopschaftabschnitt besteht. Zum Anderen vor allem beim Autoklavieren (134°C), einer Behandlung, um das Endoskop keimfrei zu machen.

Da das Linsenmaterial Glas und die Materialien des Schafts und von Abstandshaltern, üblicherweise Stahllegierungen, unterschiedliche Wärmedehnungskoeffizienten aufweisen, kommt es zu Relativbewegungen zwischen benachbarten Linsen und Abstandshaltern bzw. Linsen und dem Schaft. Auch diese Bewegungen leiten Reibungskräfte in die Linse ein.

Bei Biegung des Schafts werden wesentliche Kräfte genau an der Kante zwischen optisch wirksamer Fläche der Linse und ihrer radialen Umfangsfläche aufgenommen. An oder nahe dieser Kante werden zudem von den oben erwähnten Reib- und Stoßkräften zumindest diejenigen aufgenommen, die von Abstandshülsen oder allgemein axialen Haltern der Linse im System auf die Linse aufgebracht werden. Wenn Kräfte an eine Kante oder nahe einer Kante anliegen, brechen Kantenbereiche des belasteten Materials besonders leicht aus, und zwar umso mehr, je spitzwinkliger die Kante ist.

Um die Gefahr eines derartigen Ausbrechens zu verringern, wird in der Druckschrift DE197 50 685 A1 vorgeschlagen, die Stablinsen durch reibschlüssige Abstandshalter in einem definierten Abstand zur Innenseite der Hülse zu zentrieren. Somit liegt ein Spalt zwischen Linse und Hülse vor, so dass bei Hülsenbiegung bis zu einem gewissen Grad die Linse nicht an der Hülse anstößt.

Eine weitere Möglichkeit, Risse und Ausbrechen bei der Linse zu verhindern, ist, die Linse mit einer Fase, der Facette, zu versehen, die sich zwischen der optisch wirksamen Fläche und der radialen Umfangsfläche der Linse befindet.

Trotz dieser Maßnahme kann Ausbrechen von Linsenteilen an und nahe eben dieser Kanten nicht immer verhindert werden. Dieses Problem tritt aus den genannten Gründen insbesondere bei Stablinsen auf.

Somit ist die Aufgabe der Erfindung, eine Stablinse und ein Herstellverfahren für Stablinsen anzugeben, bei denen ein Ausbrechen von Linsenteilen noch wirksamer verringert oder verhindert wird.

Diese Aufgabe wird erfindungsgemäß durch eine Stablinse gemäß Patentanspruch 1 bzw. durch ein Verfahren zum Herstellen für Stablinsen gemäß Patentanspruch 7 gelöst.

Vorteilhafte Weiterbildungen der Erfindung sind in den abhängigen Patentansprüchen 3 bis 6 bzw. 9 bis 15 sowie 16 und 17 dargelegt.

Durch eine wesentliche Wirkung der Erfindung werden Mikrorisse, die durch Facettenherstellung oder Schleifen der gesamten Linse inklusive später nicht zu optisch wirksamen Flächen bearbeiteten Oberflächenbereichen verursacht werden, in Anzahl und Tiefe verringert oder beseitigt.

Die nicht zu optisch wirksamen Flächen bearbeiteten Oberflächenbereiche können dabei Facetten, ebenso aber auch radiale Umfangsflächen der Linse sein, in letzterem Fall insbesondere axiale Endabschnitte der radialen Umfangsflächen, an denen bei Biegung sehr hohe Kräfte auf die Linse wirken.

Stablinsen enthalten oft, insbesondere in den Endbereichen, mehrere miteinander verkittete Elemente. Um mechanische Belastungen der Kittflächen zu verringern, sind in der Druckschrift DE 31 13 110 A1 knochenförmige Stablinsen vorgeschlagen, bei denen der Durchmesser an einem axial mittleren Abschnitt geringer ist als an axial außerhalb dieses gelegenen Abschnitten der radialen Umfangsfläche. Bei der Biegung des Schafts berührt dieser die Stablinsen nur an den vorderen und hinteren Endabschnitten der Abschnitte mit größerem Durchmesser, und folglich werden nur geringe Kräfte auf die Kittflächen übertragen.

Es ist eine weitere Aufgabe der Erfindung, eine knochenförmige Stablinse und ein Herstellverfahren für knochenförmige Stablinsen anzugeben, bei denen ein Ausbrechen von Linsenteilen noch wirksamer verringert oder verhindert wird.

Diese Aufgabe wird erfindungsgemäß durch eine Stablinse gemäß Patentanspruch 2 bzw. durch ein Verfahren zum Herstellen für Stablinsen gemäß Patentanspruch 8 gelöst.

Vorteilhafte Weiterbildungen der Erfindung sind in den abhängigen Patentansprüchen 3 bis 6 bzw. 9 bis 15 sowie 16 und 17 dargelegt.

Bei Schaftbiegung sind bei knochenförmigen Linsen die einzigen den Schaft berührenden Flächen die auf der Linsenumfangsfläche axial äußeren und inneren Endabschnitte der radialen äußeren Umfangsflächen, die gegenüber den axial inneren radialen Umfangsflächen der Knochenform-Linse erweitert sind. Erfindungsgemäß weisen insbesondere diese axialen Endabschnitte der erweiterten radialen Umfangsbereiche der Stablinse mindestens einen glatten Oberflächenteilbereich auf, wobei ein axial mittlerer Abschnitt nicht glatt ist.

Die erfindungsgemäß bearbeiteten Linsen sind dabei vorzugsweise solche, die Einsatz in einem Linsensystem finden, bei dem mindestens eine der Linsen mit einer hülsenartigen Einrichtung befestigt wird und/oder mindestens ein ebenso hülsenartiger Abstandshalter zwischen Linsen verwendet wird.

Durch erfindungsgemäße Behandlung wird die Oberfläche der mindestens einen optisch nicht wirksamen Fläche der Linse sowohl bezüglich der Tiefe der Rauhigkeit als auch bezüglich der Feinstruktur der Rauhigkeit, d.h. Scharfkantigkeit der mikroskopischen Erhebungen, behandelt. Die erfindungsgemäße Oberflächenbehandlung lässt die Oberfläche feiner werden als herkömmliche Schleifbearbeitung.

Gemäß einem Aspekt der Erfindung wird die mindestens eine optisch nicht wirksame Fläche der Linse aus einem Stablinsensystem so glatt, dass Ihre Oberfläche gemäß ISO 10110 spiegelnd ist. Die demgemäß behandelte Oberfläche ist dann derart, dass man von einer polierten Oberfläche spricht.

Hierbei kann die erfindungsgemäße Oberflächenbehandlung ein Polieren sein, das zu einer Rauhigkeit Klasse P1 oder P2 nach Iso 1302: 1992 führt - in Sonderfällen noch feiner. Hierbei wird die Oberfläche glatter, Mikro-Krater, die Keime für Rissbildung darstellen, werden entgratet und verkleinert.

Das erfindungsgemäße Polieren der Linse kann entweder als herkömmliches Polieren mit unten genauer bezeichneten geeignete Körnung und Härte aufweisenden Poliermitteln in Form einer Paste oder dergleichen oder als ein Polierschleifen erfolgen, wobei das jeweilige Poliermittel an einen Poliermittelträger gebunden, bzw. in ihn eingefügt ist, so dass eine geeignete Poliermittelrauhigkeit an der Oberfläche aufgewiesen ist.

Poliermittelträger sind Pech, Hartgewebe, Hartpapier, PU-Folien, Filz, Kunststoff, z.B. Gießharze, können aber auch viele andere Materialien oder Materialienverbunde sein.

Als Poliermittel, d.h. polierende Bestandteile, kommen Ceroxid, Eisenoxid, Zirkoniumoxid, Aluminiumoxid und andere Metalloxide in Frage. Vorzugsweise werden Diamantkömer der Korngröße D7 verwendet. Hierbei sind geringere Korngrößen wie D5 oder kleiner denkbar, wodurch allerdings die Bearbeitungszeit verlängert wird.

Bei allen genannten Polierbehandlungen muss die Polierzeit mit verringertem Anpressdruck und/oder verringerter Geschwindigkeit des Poliermittels über der zu behandelnden Oberfläche steigen. Die Polierzeit, der Anpressdruck und die Poliermittelgeschwindigkeit sind in geeigneter Weise abhängig von den Parametern der zu behandelnden Oberfläche wie z.B. Glasart und Behandlungsparametern wie z.B. Temperatur anzupassen.

Die Erfindung schlägt alternativ zur Polier-Bearbeitung der mindestens einen optisch nicht wirksamen Fläche einer Linse auch ein spanfreies Bearbeiten der optisch nicht wirksamen Fläche der Linse vor, bei dem mit schnell und mit Anpressdruck darüber bewegtem Bearbeitungsmittel auf der bearbeiteten Oberfläche eine derartige Reibungswärme entsteht, dass dadurch die äußeren Oberflächenschichten der optisch nicht wirksamen Fläche der Linse in einen aufgeschmolzenen oder einen Übergangs-Zustand überführt werden, der ein Grenzzustand zwischen fester und flüssiger Phase ist. Durch dieses Aufschmelzen bzw. bei dem Übergangszustand findet gegebenenfalls unter Aufbringen von Druck ein Verschmelzen von Rissen ebenso wie von Unebenheiten statt, die als Oberflächenrauhigkeit auf der oder den optisch nicht wirksamen Flächen der Linse bestanden haben. Die Oberfläche wird in ihrer Rauhigkeit dann quantitativ, d.h. bezüglich Rauhigkeitstiefe, ebenso wie qualitativ, d.h. bezüglich der Form von mikroskopischen Spitzen und Tälern der Rauhigkeitsfläche, glatt.

Hierbei kann die Geschwindigkeit der Bewegung ebenso wie ein gegebenenfalls zusätzlich aufgebrachter Anpressdruck konstant oder veränderlich und in beiden Fällen bezüglich Linsengröße, Glasart, vorhandenen Rissen und gewünschter Oberflächenrauhigkeit eingestellt bzw. gesteuert sein.

Auch diese Oberflächenbehandlung kann mit Geschwindigkeiten erfolgen, die denen des Hochgeschwindigkeitsschleifens entsprechen, wobei auch hier Bearbeitungszeit und eventuell Druck, üblicherweise nach unten, anzupassen sind. Durch geeignete Erhöhung der Bearbeitungsgeschwindigkeit bei gleichzeitiger Verringerung des Anpressdrucks kann ein Ausreißen von Linsenpartikeln bei der Bearbeitung verringert oder verhindert werden.

Bei einem weiteren Aspekt der Erfindung wird die mindestens eine optisch nicht wirksame Fläche der Linse mit einem Laserstrahl bestrahlt, so dass die äußeren Oberflächenschichten aufgeschmolzen oder in oben beschriebenen Übergangszustand versetzt werden, so dass die Oberflächen geglättet werden und Mikrorisse, die durch die Herstellung der Facette oder der gesamten Linse mit Facette verursacht wurden, verringert oder eliminiert werden. Zum Überführen in den Übergangszustand oder den aufgeschmolzenen Zustand werden Temperaturen von etwa 500°C, vorzugsweise 700°C, oder mehr aufgebracht. Diese Temperaturbehandlung der Linsenoberfläche mittels Laserbestrahlung beinhaltet keine mechanische Bearbeitung und entsprechend keine Gefahr mechanischen Herauslösens von Linsenpartikeln.

Dabei kann zusätzlich noch Anpressdruck, vorzugsweise mit einem ausreichend glatten Bearbeitungsmittel, auf die behandelte optisch nicht wirksame Fläche der Linse aufgebracht werden. Dies kann sowohl statisch als auch mittels einer Drehbewegung des Bearbeitungsmittels über die zu bearbeitende Oberfläche erfolgen.

Die Erfindung bezieht sich auch auf ein Stablinsensystem, bei dem mindestens eine der Stablinsen mindestens eine optisch nicht wirksame Fläche aufweist, die wie oben beschrieben behandelt ist.

Ferner bezieht sich die Erfindung auch auf Endoskope, die ein Stablinsensystem mit einer oder mehreren Stablinsen mit mindestens einer erfindungsgemäß behandelten optisch nicht wirksamen Oberfläche umfassen.

Im Folgenden wird die Erfindung anhand spezieller Ausführungsbeispiele beschrieben, die durch die folgenden Figuren illustriert sind. Dabei zeigen:
Fig. 1 ein Endoskop mit einem Stablinsensystem, das eine erfindungsgemäße Linse gemäß Fig. 3 aufweist;
Fig. 2 einen Ausschnitt eines Stablinsensystems mit einer erfindungsgemäßen knochenförmigen Stablinse gemäß Fig. 3;
Fig. 3 eine erfindungsgemäße Stablinse mit Facetten;
Fig. 4a eine Facette, die einen 45°-Winkel zur Mittelachse der Linse aufweist, und einen axialen Endabschnitt der radialen Linsenumfangsfläche einer erfindungsgemäßen knochenförmigen Stablinse;
Fig. 4b einen Ausschnitt wie Fig. 4a, im Gegensatz zu dieser allerdings mit einem 30°-Facettenwinkel zur Mittelachse der Linse;
Fig. 4c einen Ausschnitt wie Fig. 4a, im Gegensatz zu dieser allerdings mit einer Facette, die als Radius zwischen der optisch wirksamen Fläche der Linse und deren die Linsenhalterung berührenden Umfangsfläche ausgebildet ist;
Fig. 5a eine Prinzipskizze der Auswirkung einer quantitativen Behandlung der Oberflächenrauhigkeit einer Linse, d.h. bezüglich der Rauhigkeitstiefe der Oberfläche;
Fig. 5b eine Prinzipskizze der Auswirkung einer qualitativen Behandlung der Oberflächenrauhigkeit einer Linse, d.h. bezüglich der Rauhigkeitsstruktur der Oberfläche;

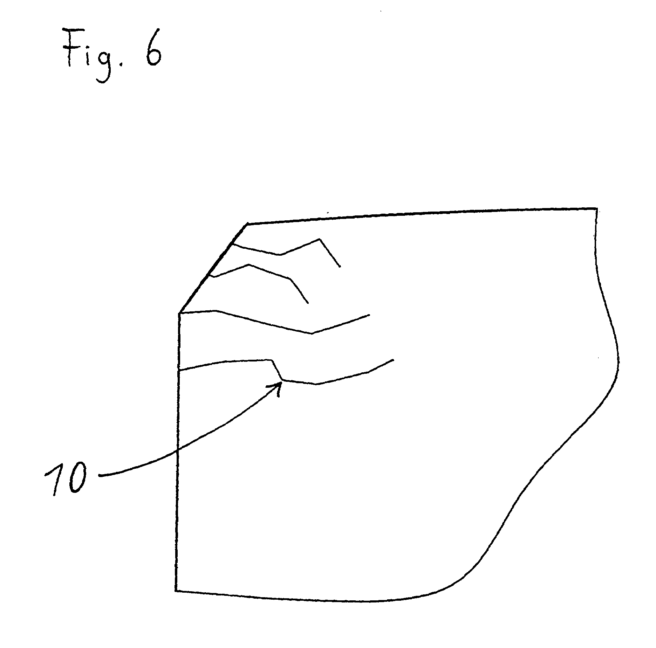

Fig. 6 schematisch Risse bzw. Mikrorisse in den äußeren Schichten einer Facette und Facetten-nahen Bereichen der Linse, deren Keime z.B. beim Schleifen der Facette entstehen können;
Im Folgenden werden Ausführungsbeispiele beschrieben, mit denen die Erfindung verwirklicht werden kann.

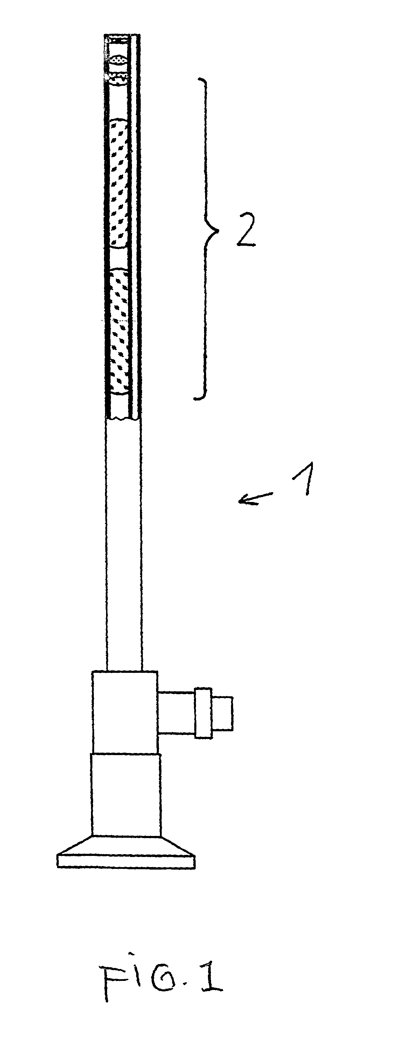

Fig. 1 zeigt ein Endoskop 1, in dem ein Stablinsensystem 2 eingesetzt ist

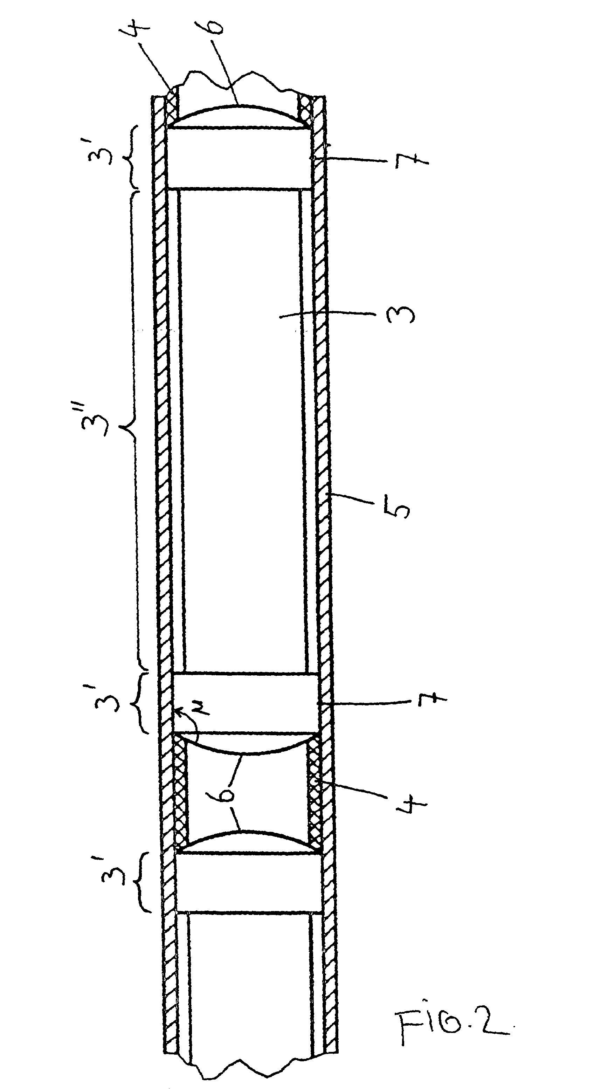

Ein Ausschnitt eines Stablinsensystems 2 ist in Fig. 2 näher dargestellt. Hierbei handelt es sich um ein System 2, das aus knochenförmigen Stablinsen 3 besteht, die mit einem Abstandshalter 4 beabstandet sind. Der Abstandshalter 4 befindet sich zwischen den zwei Stablinsen 3, und diese Bauteile werden durch Verschraubung aneinander gepresst.
Dazu werden zwei hülsenförmige Schaftbauteile 5 verschraubt, so dass ein sich auf einer ersten Seite befindendes erstes Schaftbauteil 5 eine auf der ersten Seite gelegene erste äußere Linse 3 axial mit Kraft zu einer zweiten Seite hin beaufschlagt und ein sich auf der zweiten Seite befindendes zweites Schaftbauteil 5 eine auf der zweiten Seite gelegene zweite äußere Linse 3 axial mit Kraft zur ersten Seite hin beaufschlagt. Zwischen den mit Kraft beaufschlagten Linsen ist der Abstandhalter angebracht, so dass das System 2 aus den zwei Stablinsen 3 und dem Abstandshalter 4 axial festgelegt gepresst ist.

Die Abstandshalter 4 sind an Stellen an die Linsen gedrückt, die sich an äußeren Kreisringen auf den optisch wirksamen Flächen 6 befinden.

Um die Wahrscheinlichkeit einer Beschädigung der Linsen 3 durch die Abstandshalter 4, besonders aber durch Kräfte gering zu halten, die bei einer Biegung des Schafts 5 an Berührungspunkten zwischen dem Schaft 5 und der Kante zwischen optisch wirksamer Fläche 6 und Umfangsfläche 7 der Linse 3 auf diesen Eckpunkt wirken, sind die Randwinkel µ zwischen optisch wirksamen Flächen 6 und radialen Umfangsflächen 7 der Linsen 3 vergrößert, um einem Bruch an den durch diese Winkel bestimmten Kanten vorzubeugen.

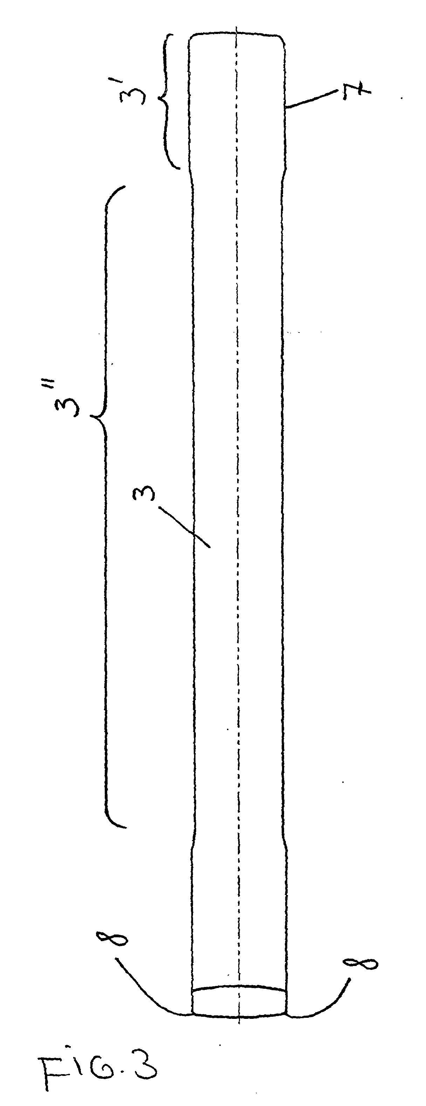

Fig. 3 stellt eine knochenförmige Stablinse 3 ohne umgebende Hülse dar, wobei hier insbesondere die verschiedenen Linsenabschnitte ersichtlich sind.

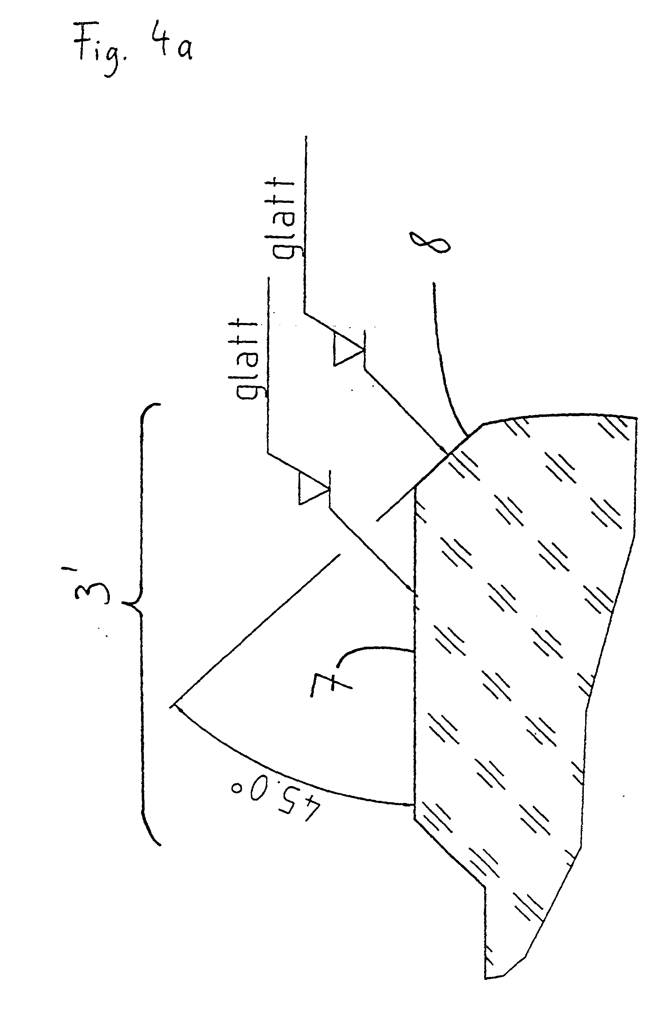

Die Vergrößerung der Randwinkel µ ist eine Anfasung der den Randwinkel µ als Innenwinkel aufweisenden Kanten, wie in den Figuren 4a bis 4c gezeigt ist, also eine Teilung des Winkels p in zwei Einzelwinkel. Diese Fase 8, die man Facette nennt, ist so klein, dass die Abstandshülse 4, bzw. deren Innenkante, radial innerhalb des Bereichs der Facette an der Linse, also nach wie vor ihrer optisch wirksamen Fläche, ansteht. Wie in Fig. 4a gezeigt werden Facetten 8 oft in einem 45°-Winkel zur Linsenachse, d.h. mit einem 45°-Winkel zur radialen Umfangsfläche 7 der Linse 3 und einem Winkel von annähernd 45° zur optisch wirksamen Fläche 6, angefertigt. Letzterer Winkel ist durch die Linsenkrümmung geringfügig kleiner als eben jene 45°. Die genannte Ausführungsform bewirkt zwei im Prinzip gleiche resultierende Winkel, mithin als kleinsten der beiden resultierenden Winkel einen größtmöglichen Winkel, was geringste Gefahr von Ausbrechen der Linsenkante bedeutet.

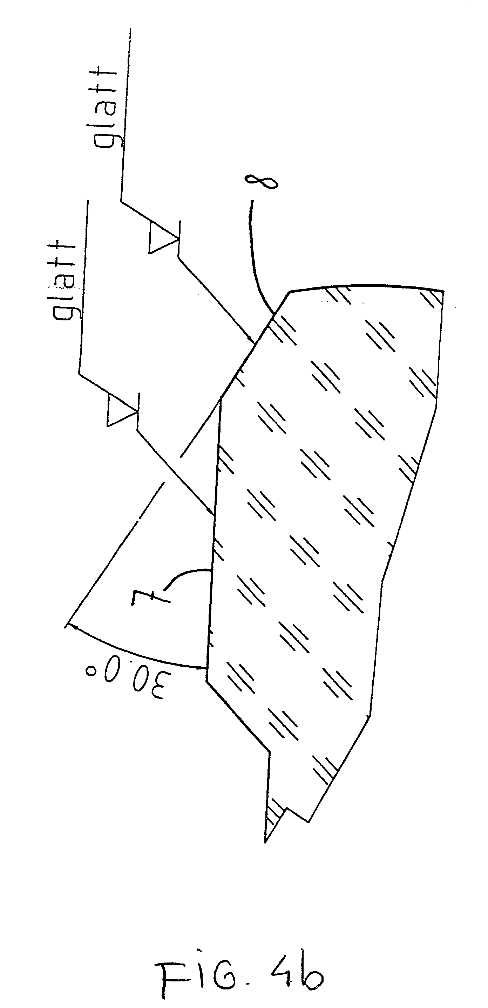

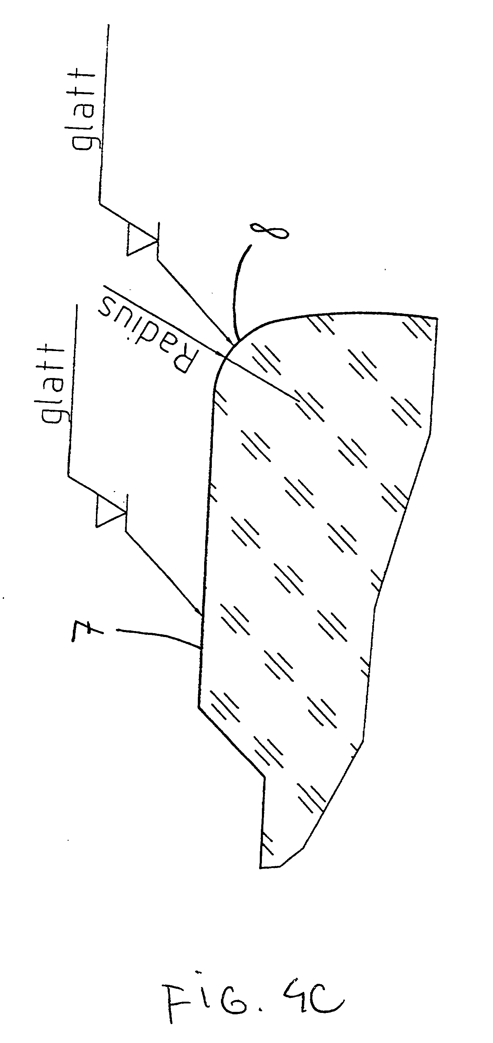

Bei einer weiteren Ausführungsform, die in Fig. 4b gezeigt ist, weist die Facette 8 einen 60°-Winkel zur optisch wirksamen Fläche 6 und einen 30°-Winkel zur Linsenachse auf. Diese Struktur hat zwar den Nachteil, dass die Abstandshülse 4, d.h. der Abstandshalter 4, auf eine Fläche, die optisch wirksame Fläche, stößt, die zur Facette 8 stärker abgekantet ist und damit leichter brechen kann, jedoch ist der Winkel der Facette 8 zur Umfangsfläche 7 der Linse 3 kleiner, welcher entscheidend ist für ein Brechen der Facette 8 bei einer Biegung des Schafts 5. Hierbei treten Kräfte auf, die an Berührungspunkten zwischen dem Schaft 5 und der Kante zwischen optisch wirksamer Fläche 6 und Umfangsfläche 7 der Linse 3 auf diesen Eckpunkt wirken. Mikroskopisch gesehen ist die Auflagefläche bei einer geringer abgekanteten Facettenfläche 8, z.B. 30°, größer als bei einer mit 45° abgekanteten Facettenfläche 8. Dies wirkt sich wesentlich aus in Bezug auf die Bruchsicherheit der Kante zwischen optisch wirksamer Fläche 6 und Umfangsfläche 7.

Eine in Bezug auf diese Bruchsicherheit ideale Form der Facette 8 ist in Fig. 4c dargestellt: Hier ist die Facette 8 als stetiger Übergang, d.h. als Radius, von der radialen Umfangsfläche 7 zur optisch wirksamen Fläche 6 ausgeführt. Durch diesen stetigen Übergang existiert keine Kante, an der eine deutliche Drucküberhöhung bei Schaftbiegung auftreten kann. Ebenso liegt keine Kante am Übergang zwischen optisch wirksamer Fläche 6 und Facette 8 vor, wodurch die Gefahr eines Ausbrechens von Teilen aus der Facette 8 durch den Anpressdruck der Abstandshülse 4 minimiert ist.

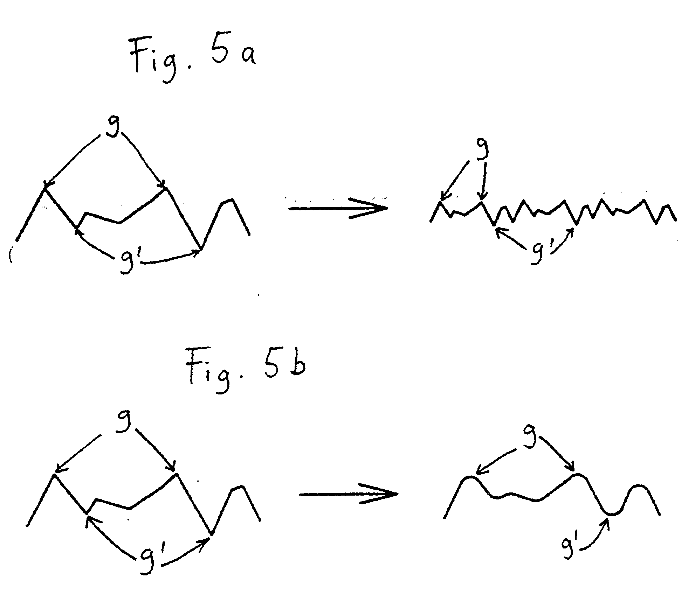

Wie in den Figuren 5a und 5b gezeigt ist, sind die Oberflächen der Facetten 8 sowie der radial äußeren Flächen 7 der Linsen nach dem herkömmlichen Schleifen, vorzugsweise der gesamten Linse 3, so behandelt, dass sie in einem glatten Zustand vorliegen.

Dabei liegt eine Oberfläche 7, 8 vor, deren Rauhigkeitstiefe verringert ist, wie in Fig. 5a gezeigt ist, und deren Rauhigkeitsstruktur weniger schroff ist, wie in Fig. 5b gezeigt ist, d.h. die mikroskopischen Erhebungen 9, bzw. Vertiefungen 9' sind mit sanfteren Übergängen versehen. Mikrorisse 10, wie sie nach einer herkömmlichen Schleifbehandlung vorliegen können, sind in der erfinderischen, also glatten Oberfläche der Facette 8 und/oder Umfangsfläche 7 eliminiert oder zumindest signifikant verringert oder verkleinert. Somit bestehen weniger oder keine Mikrorisse, deren Rissfortschritt die gesamte Linse 3 schädigen oder zerstören kann, und durch glattere mikrorissfreiere Oberfläche 7, 8 bestehen auch weniger Keime für eine Rissbildung.

Im dargestellten Ausführungsbeispiel entspricht der Abschnitt, in dem die radiale Umfangsfläche 7 der Linse 3 glatt ist, genau dem Abschnitt 3' der knochenförmigen Linse 3 mit großem Radius, wohingegen der Abschnitt 3" der knochenförmigen Linse 3 mit kleinem Radius nach der herkömmlichen Schleifbehandlung nicht glatt ist.

Gemäß einem bevorzugten Ausführungsbeispiel ist die mindestens eine optisch nicht wirksame Fläche 7, 8 gemäß ISO 10110 spiegelnd und ist durch Sichtprobe als poliert zu bezeichnen.

Die Güte der spiegelnden Oberfläche 7, 8 hat nach Iso 1302: 1992 eine Oberflächenrauhigkeit von vorzugsweise P1, kann aber auch z.B. P2 oder noch feiner sein.

Außer durch Polieren mit einem Poliermittel (Ceroxid, Eisenoxid, Zirkoniumoxid, Aluminiumoxid, auch anderes Metalloxid, oder Diamant) als Paste kann die zu behandelnde Oberfläche gemäß einem bevorzugten Ausführungsbeispiel durch ein sogenanntes Polierschleifen angefertigt werden, wobei ein Poliermittel verwendet wird, das aus Diamant, Korngröße D7, oder einem anderen der oben genannten eigentlichen polierenden Mittel, und Gießharz als Poliermittelträger (alternativ: Pech; Hartgewebe; Hartpapier; PU-Folien; Filz; andere Kunststoffe) besteht. Dabei bindet der Poliermittelträger das polierende Mittel, und die resultierende Oberfläche weist die geeignete Rauhigkeit auf, um den Polierschleifvorgang mit dem gewünschten Ergebnis (hier: Rauhigkeit nach Iso-Norm P1) durchführen zu können.

Die Erfindung ist nicht auf die beschriebenen Ausführungsformen beschränkt, sondern kann in geeigneter Weise abgeändert und modifiziert werden, ohne den Schutzbereich der Patentansprüche zu verlassen.

## Patentansprüche

1. Stablinse (3) mit einer Oberfläche, die mindestens einen optisch wirksamen (6) und im Bereich des radialen Umfangs (7) der Stablinse (3) mindestens einen optisch nicht wirksamen Bereich (7, 8) aufweist, **dadurch gekennzeichnet, dass** mindestens ein axialer Endabschnitt (3') des radialen Umfangsbereichs der Stablinse (3) mindestens einen glatten Oberflächenteilbereich (3') enthält, wobei ein axial mittlerer Abschnitt (3") nicht glatt ist.

2. Knochenförmige Stablinse (3) mit einer Oberfläche, die mindestens einen optisch wirksamen (6) und im Bereich des radialen Umfangs (7) der Stablinse (3) mindestens einen optisch nicht wirksamen Bereich (7, 8) aufweist, wobei axial äußere radiale Umfangsflächen (3') gegenüber axial inneren radialen Umfangsflächen (3") der Knochenform-Linse (3) im Durchmesser erweitert sind, **dadurch gekennzeichnet, dass** mindestens eine erweiterte Umfangsfläche (3') mindestens einen glatten Oberflächenteilbereich (3') enthält, wobei ein axial mittlerer Abschnitt (3") nicht glatt ist.

3. Stablinse (3) nach einem der Patentansprüche 1 oder 2, **dadurch gekennzeichnet, dass** mindestens ein optisch nicht wirksamer Oberflächenbereich (7, 8) mindestens einen schleifrauhen Oberflächenteilbereich (3") enthält.

4. Stablinse (3) nach einem der vorhergehenden Patentansprüche, **dadurch gekennzeichnet, dass** mindestens ein mechanischen Belastungen ausgesetzter Oberflächenteilbereich (3', 8) mindestens einen glatten Oberflächenteilbereich (3', 8) enthält.

5. Stablinse (3) nach einem der vorhergehenden Patentansprüche, **dadurch gekennzeichnet, dass** eine Facette (8), die sich zwischen einem optisch wirksamen Oberflächenbereich (6) und einer radialen Umfangsfläche (7) der Stablinse (3) befindet, mindestens einen glatten Oberflächenteilbereich (3', 8) enthält.

6. Stablinse (3) nach einem der vorhergehenden Patentansprüche, **dadurch gekennzeichnet, dass** der mindestens eine glatte Oberflächenteilbereich (3', 8) nach dem Oberflächenbehandeln eine spiegelnde Oberfläche aufweist oder poliert ist.

7. Verfahren zum Herstellen einer Stablinse (3) mit einer Oberfläche, die mindestens einen optisch wirksamen (6) und im Bereich des radialen Umfangs (7) der Stablinse (3) mindestens einen optisch nicht wirksamen Bereich (7, 8) aufweist, **dadurch gekennzeichnet, dass** zumindest ein Oberflächenteilbereich mindestens eines axialen Endabschnitts (3') des radialen Umfangs (7) der Stablinse (3) geglättet wird, wobei ein axial mittlerer Abschnitt (3") nicht geglättet wird.

8. Verfahren zum Herstellen einer knochenförmigen Stablinse (3) mit einer Oberfläche, die mindestens einen optisch wirksamen (6) und im Bereich des radialen Umfangs (7) der Stablinse (3) mindestens einen optisch nicht wirksamen Bereich (7, 8) aufweist, wobei axial äußere radiale Umfangsflächen (3') gegenüber axial inneren radialen Umfangsflächen (3") der Knochenform-Linse (3) im Durchmesser erweitert sind, **dadurch gekennzeichnet, dass** zumindest ein Oberflächenteilbereich mindestens einer erweiterten axial äußeren radialen Umfangsfläche (3') geglättet wird, wobei ein axial mittlerer Abschnitt (3") nicht geglättet wird.

9. Verfahren nach einem der Patentansprüche 7 oder 8, **dadurch gekennzeichnet, dass** zumindest ein Oberflächenteilbereich poliert wird.

10. Verfahren nach einem der Patentansprüche 7 oder 8, **dadurch gekennzeichnet, dass** der zumindest eine Oberflächenteilbereich bis zur Erweichungstemperatur erwärmt wird.

11. Verfahren nach Patentanspruch 13, **dadurch gekennzeichnet, dass** die Erwärmung durch eine Reibdrehbewegung bewirkt wird.

12. Verfahren nach Patentanspruch 14, **dadurch gekennzeichnet, dass** die Reibdrehbewegung eine dem Hochgeschwindigkeitsschleifen ähnliche Reibdrehbewegung ist.

13. Verfahren nach Patentanspruch 13, **dadurch gekennzeichnet, dass** mindestens ein Oberflächenteilbereich (3', 8) durch Behandeln mittels Laser-Bestrahlung erwärmt wird.

14. Verfahren nach einem der Patentansprüche 8 bis 17, **dadurch gekennzeichnet, dass** eine Facette (8) geglättet wird.

15. Verfahren nach Patentanspruch 18, **dadurch gekennzeichnet, dass** die Facette (8) durch die Glättung hergestellt wird.

16. Stablinsensystem (2), das mindestens eine Stablinse (3) nach einem der Patentansprüche 1 bis 7 aufweist.

17. Endoskop (1) mit einem Stablinsensystem (2) nach Patentanspruch 20.

## Claims

1. Rod lens (3) having a surface which has at least one optically active region (6) and, in the region of the radial circumference (7) of the rod lens (3), at least one optically inactive region (7, 8), **characterized in that** at least one axial end section (3') of the radial circumferential region of the rod lens (3) contains at least one smooth surface subregion (3'), an axially central section (3'') not being smooth.

2. Bone-shaped rod lens (3) having a surface which has at least one optically active region (6) and, in the region of the radial circumference (7) of the rod lens (3), has at least one optically inactive region (7, 8), axially outer radial circumferential surfaces (3') being widened in diameter as compared with axially inner radial circumferential surfaces (3'') of the bone-shaped lens (3), **characterized in that** at least one widened circumferential surface (3') contains at least one smooth surface subregion (3'), an axially central section (3'') not being smooth.

3. Rod lens (3) according to either of Patent Claims 1 and 2, **characterized in that** at least one optically inactive surface region (7, 8) contains at least one roughly ground surface subregion (3'').

4. Rod lens (3) according to one of the preceding patent claims, **characterized in that** at least one surface subregion (3', 8) subjected to mechanical loading contains at least one smooth surface subregion (3', 8).

5. Rod lens (3) according to one of the preceding patent claims, **characterized in that** a facet (8) which is located between an optically active surface region (6) and a radial circumferential surface (7) of the rod lens (3) contains at least one smooth surface subregion (3', 8).

6. Rod lens (3) according to one of the preceding patent claims, **characterized in that**, following the surface treatment, the at least one smooth surface subregion (3', 8) has a reflective surface or is polished.

7. Method for producing a rod lens (3) with a surface which has at least one optically active region (6) and, in the region of the radial circumference (7) of the rod lens (3), has at least one optically inactive region (7, 8), **characterized in that** at least one surface subregion of at least one axial end section (3') of the radial circumference (7) of the rod lens (3) is smoothed, an axially central section (3'') not being smoothed.

8. Method for producing a bone-shaped rod lens (3) with a surface which has at least one optically active region (6) and, in the region of the radial circumference (7) of the rod lens (3), has at least one optically inactive region (7, 8), axially outer radial circumferential surfaces (3') being widened in diameter as compared with axially inner radial circumferential surfaces (3'') of the bone-shaped lens (3), **characterized in that** at least one surface subregion of at least one widened axially outer radial circumferential surface (3') is smoothed, an axially central section (3'') not being smoothed.

9. Method according to either of Patent Claims 7 and 8, **characterized in that** at least one surface subregion is polished.

10. Method according to either of Patent Claims 7 and 8, **characterized in that** the at least one surface subregion is heated as far as the softening temperature.

11. Method according to Patent Claim 10, **characterized in that** the heating is effected by a frictional rotational movement.

12. Method according to Patent Claim 11, **characterized in that** the frictional rotational movement is a frictional rotational movement similar to highspeed grinding.

13. Method according to Patent Claim 10, **characterized in that** at least one surface subregion (3', 8) is heated by being treated by means of laser radiation.

14. Method according to one of Patent Claims 7 to 13, **characterized in that** a facet (8) is smoothed.

15. Method according to Patent Claim 14, **characterized in that** the facet (8) is produced by the smoothing.

16. Rod lens system (2) which comprises at least one rod lens (3) according to one of Patent Claims 1 to 6.

17. Endoscope (1) having a rod lens system (2) according to Patent Claim 16.

## Revendications

1. Lentille en barre (3) munie d'une surface qui présente au moins une zone optiquement active (6) et, dans la zone du pourtour radial (7) de la lentille en barre (3), au moins une zone optiquement non active (7, 8), **caractérisée en ce qu'**au moins une section d'extrémité axiale (3') de la zone du pourtour radial de la lentille en barre (3) comporte au moins une zone partielle de surface lisse (3'), une section centrale axiale (3'') n'étant pas lisse.

2. Lentille en barre en forme d'os (3) munie d'une surface qui présente au moins une zone optiquement active (6) et, dans la zone du pourtour radial (7) de la lentille en barre (3), au moins une zone optiquement non active (7, 8), les surfaces de pourtour radiales extérieures axiales (3') étant étendues au niveau du diamètre par rapport aux surfaces de pourtour radiales intérieures axiales (3'') de la lentille en forme d'os (3), **caractérisée en ce qu'**au moins une surface de pourtour étendue (3') comporte au moins une zone partielle de surface lisse (3'), une section centrale axiale (3'') n'étant pas lisse.

3. Lentille en barre (3) selon l'une des revendications 1 ou 2, **caractérisée en ce qu'**au moins une zone de surface optiquement non active (7, 8) comporte au moins une zone partielle de surface polie rugueuse (3'').

4. Lentille en barre (3) selon l'une des revendications précédentes, **caractérisée en ce qu'**au moins une zone partielle de surface (3', 8) exposée à des contraintes mécaniques comporte au moins une zone partielle de surface lisse (3', 8).

5. Lentille en barre (3) selon l'une des revendications précédentes, **caractérisée en ce qu'**une facette (8) qui se trouve entre une zone de surface optiquement active (6) et une surface de pourtour radiale (7) de la lentille en barre (3) comporte au moins une zone partielle de surface lisse (3', 8).

6. Lentille en barre (3) selon l'une des revendications précédentes, **caractérisée en ce que** l'au moins une zone partielle de surface lisse (3', 8), après le traitement de surface, présente une surface réfléchissante ou est polie.

7. Procédé pour fabriquer une lentille en barre (3) munie d'une surface qui présente au moins une zone optiquement active (6) et, dans la zone du pourtour radial (7) de la lentille en barre (3), au moins une zone optiquement non active (7, 8), **caractérisé en ce qu'**au moins une zone partielle de surface d'au moins une section d'extrémité axiale (3') du pourtour radial (7) de la lentille en barre (3) est lissée, une section centrale axiale (3'') n'étant pas lissée.

8. Procédé pour fabriquer une lentille en barre en forme d'os (3) munie d'une surface qui présente au moins une zone optiquement active (6) et, dans la zone du pourtour radial (7) de la lentille en barre (3), au moins une zone optiquement non active (7, 8), les surfaces de pourtour radiales extérieures axiales (3') étant étendues au niveau du diamètre par rapport aux surfaces de pourtour radiales intérieures axiales (3'') de la lentille en forme d'os (3), **caractérisé en ce qu'**au moins une zone partielle de surface d'au moins une surface de pourtour extérieure radiale (3') étendue dans le sens axial est lissée, une section centrale axiale (3'') n'étant pas lissée.

9. Procédé selon l'une des revendications 7 ou 8, **caractérisé en ce qu'**au moins une zone partielle de surface est polie.

10. Procédé selon l'une des revendications 7 ou 8, **caractérisé en ce que** l'au moins une zone partielle de surface est chauffée jusqu'à la température de ramollissement.

11. Procédé selon la revendication 10, **caractérisé en ce que** l'échauffement est produit par un mouvement de rotation et de frottement.

12. Procédé selon la revendication 11, **caractérisé en ce que** le mouvement de rotation et de frottement est un mouvement de rotation et de frottement similaire à une rectification à grande vitesse.

13. Procédé selon la revendication 10, **caractérisé en ce qu'**au moins une zone partielle de surface (3', 8) est chauffée par un traitement au moyen d'un rayonnement laser.

14. Procédé selon l'une des revendications 7 à 13, **caractérisé en ce qu'**une facette (8) est lissée.

15. Procédé selon la revendication 14, **caractérisé en ce que** la facette (8) est réalisée par lissage.

16. Système à lentille en barre (2) qui présente au moins une lentille en barre (3) selon l'une des revendications 1 à 6.

17. Endoscope (1) muni d'un système à lentille en barre (2) selon la revendication 16.
